# EUROPÄISCHE PATENTSCHRIFT

(11) **EP 2 694 956 B1**
(45) Veröffentlichungstag und Bekanntmachung des Hinweises auf die Patenterteilung: **27.07.2016**
(21) Anmeldenummer: 12701907.3
(22) Anmeldetag: 02.02.2012
(51) Int. Cl.: G01N 25/48, G01N 25/56

(54) **THERMOELEKTRISCHE FEUCHTIGKEITSDETEKTION**
THERMOELECTRIC MOISTURE DETECTION
DÉTECTION THERMOÉLECTRIQUE D'HUMIDITÉ

(30) Priorität: 01.04.2011 DE 102011006638
(43) Veröffentlichungstag der Anmeldung: 12.02.2014
(73) Patentinhaber: Robert Bosch GmbH, 70442 Stuttgart (DE)
(72) Erfinder: HENRICI, Fabian, 70195 Stuttgart (DE)
(86) Internationale Anmeldenummer: PCT/EP2012/051721
(87) Internationale Veröffentlichungsnummer: WO 2012/130504

(56) Entgegenhaltungen:
- WO-A2-2004/097373
- DD-A1- 243 770
- US-A- 2 732 710
- US-A- 3 319 456
- US-B1- 6 239 415

## Beschreibung

### Stand der Technik

Die vorliegende Erfindung bezieht sich auf ein Verfahren zum Melden eines Ereignisses.

Es sind bereits vielfältige autarke Mikrosysteme entwickelt worden. Hierbei stellt sich jedoch das Problem einer ausreichenden Energieversorgung, wozu entweder eine Batterie oder eine Kombination aus einem Energy Harvester und einer Pufferbatterie eingesetzt wird. Beim alleinigen Einsatz einer Batterie ist die Lebensdauer des Mikrosystems begrenzt. Beim Einsatz eines Energy Harvesters ist es grundsätzlich unmöglich zu einem bestimmten Zeitpunkt die Funktion des Mikrosystems zu garantieren, da im Voraus nicht bekannt ist ob der Energy Harvester ausreichend Energie aus der Umgebung gewonnen hat. Dies betrifft alle Formen des Energy Harvestings aus der Umgebung.

Die WO 2004/097373 A2 befasst sich mit einem thermoelektrischen Biosensor für Analyten in einem Gas. Ein Mikroprozessor ist mit zwei Kontakten eines Sensorelements verbunden und ausgebildet, um eine an den zwei Kontakten anliegende Spannung zu erfassen und auszuwerten.

Die DD 243 770 A1 betrifft ein thermisches Feuchtemessgerät zur Bestimmung des Feuchtegehaltes und Feuchtepotenzials von Gasen, Flüssigkeiten und Feststoffen mit sorbierter Feuchtigkeit.

Offenbarung der Erfindung

Vor diesem Hintergrund wird mit der vorliegenden Erfindung ein Verfahren zum Melden eines Ereignisses gemäß dem Anspruch 1 vorgestellt. Vorteilhafte Ausgestaltungen ergeben sich aus den jeweiligen Unteransprüchen und der nachfolgenden Beschreibung.

Die Erfindung basiert auf der Erkenntnis, dass eine Vorrichtung zum Melden eines Ereignisses zuverlässig betrieben werden kann, wenn durch das Auftreten des Ereignisses ausreichend Energie zum Betreiben der Schaltung gewonnen werden kann. Da die sich aus dem Ereignis selbst zu gewinnende Energiemenge häufig begrenzt ist, wird ein Energiespeicher vorgesehen, der ansprechend auf das Ereignis Energie freisetzt, die zum Betreiben der Schaltung eingesetzt wird. Der Energiespeicher wirkt somit als eine Art Verstärker, mit dem die aus dem Ereignis selbst resultierende Energie verstärkt werden kann. Auf diese Weise ist die Vorrichtung nicht darauf angewiesen, genügend Energie zum Betrieb der Vorrichtung aus der Umgebung zu beziehen. Auch ist es nicht erforderlich, die Vorrichtung mit einer Batterie auszurüsten. Dadurch bietet sich insbesondere der Einsatz in sicherheitskritischen Systemen an.

Die garantierte Bereitstellung von Energie erlaubt somit den Einsatz von autarken Mikrosystemen in sicherheitskritischen Systemen. Ebenso kann im Gegensatz zu einer Batterie eine extrem lange Lebenszeit für das Mikrosystem garantiert werden. Auch können Kosten gespart werden, da weder ein Sensorelement zum direkten Sensieren des Ereignisses noch eine Batterie zur Energieversorgung des Mikrosystems benötigt werden.

Eine Vorrichtung zur Durchführung des erfindungsgemäßen Verfahrens weist folgende Merkmale auf:
einen chemischen Energiespeicher, der ausgebildet ist, um bei einer Beeinflussung durch das Ereignis thermische Energie freizusetzen;
einen Wandler, der ausgebildet ist, um die thermische Energie in elektrische Energie zu wandeln; und
eine Schaltung, die ausgebildet ist, um betrieben durch die elektrische Energie ein elektrisches Signal zum Melden des Ereignisses zu erzeugen.

Bei dem Ereignis handelt es sich um das Auftreten von Feuchtigkeit.

Das Ereignis stößt eine Reaktion in dem chemischen Energiespeicher an, die zur Freisetzung der thermischen Energie in Form von Abwärme führt. Dazu besteht der Energiespeicher aus Metalloxid, beispielsweise Calciumoxid. Der Wandler ist thermisch mit dem Energiespeicher gekoppelt, so dass die thermische Energie möglichst verlustlos auf den Wandler übertragen werden kann. Dazu kann der Wandler direkt an den Energiespeicher angrenzend angeordnet sein.

Der Wandler kann ein thermoelektrischer Generator sein. Der Wandler ist ausgebildet, um eine für den Betrieb der Schaltung geeignete elektrische Spannung sowie einen für den Betrieb ausreichenden elektrischen Strom zu erzeugen. Der Wandler ist über elektrische Kontakte oder elektrische Leitungen mit der Schaltung verbunden. Die elektrische Schaltung kann direkt angrenzend an den Wandler angeordnet sein. Auf diese Weise können die Schaltung, der Wandler und der Energiespeicher ein kompaktes Element bilden. Die Schaltung kann eine integrierte Schaltung sein. Die Schaltung kann auf Siliziumtechnologie oder auf organischen Schaltkreisen basieren. Die Schaltung kann ausgebildet sein, um das elektrische Signal mit einer vorbestimmten Signalform zu erzeugen. Die Schaltung weist eine Übertragungsschnittstelle auf, um das elektrische Signal an der Übertragungsschnittstelle bereitzustellen. Über die Übertragungsschnittstelle kann das elektrische Signal an eine Auswerteeinrichtung übertragen werden. Die Schaltung wird ausschließlich mittels der von dem Wandler bereitgestellten Energie betrieben. Indem für den Betrieb der Vorrichtung nur dann ausreichend Energie zur Verfügung steht, wenn das Ereignis auftritt, fungiert die Vorrichtung als Sensor für das Ereignis. Tritt das Ereignis auf, so ist die Vorrichtung aktiv und stellt das elektrische Signal bereit. Tritt das Ereignis dagegen nicht auf, so ist die Vorrichtung inaktiv und stellt das elektrische Signal nicht bereit. Somit zeigt das elektrische Signal ein Auftreten des Ereignisses an.

Gemäß einer Ausführungsform können der Energiespeicher, der Wandler und die Schaltung ein Mikrosystem bilden. Unter einem Mikrosystem kann ein System verstanden werden, dessen Abmessungen sich im Bereich von Mikrometern bewegen. Ein Mikrosystem zeichnet sich zum einen durch einen geringen Platzbedarf und zum anderen durch einen geringen Energiebedarf aus.

Die Vorrichtung weist ein Gehäuse zum Aufnehmen des Energiespeichers, des Wandlers und der Schaltung auf. Das Gehäuse weist im Bereich des Energiespeichers eine Umgebungsschnittstelle auf, um die Beeinflussung des Energiespeichers durch das Ereignis zu ermöglichen. Das Gehäuse kann den Energiespeicher, den Wandler und die Schaltung vollständig umschließen. Auch kann das Gehäuse eine auf einer Seite offene Wanne ausbilden in der der Energiespeicher, der Wandler und die Schaltung angeordnet sind. Die Umgebungsschnittstelle kann ein Bereich mit einer hohen Wärmeleitfähigkeit sein, um Wärme aus der Umgebung des Gehäuses an den Energiespeicher weiterzuleiten. Erfindungsgemäß ist die Umgebungsschnittstelle geeignet, um Feuchtigkeit aus einer Umgebung der Vorrichtung durch eine Wand des Gehäuses zu dem Energiespeicher zu leiten.

Beispielsweise kann die Umgebungsschnittstelle eine Öffnung des Gehäuses umfassen. Die Umgebungsschnittstelle kann eine einzige Öffnung, die sich im Bereich des Energiespeichers befindet oder sich über einen Bereich des Energiespeichers hinauserstreckt, umfassen. Auch kann die Umgebungsschnittstelle durch eine Mehrzahl von Öffnungen gebildet werden. Über eine Öffnung kann insbesondere Wasser aus einer Umgebung der Vorrichtung sehr effektiv zu dem Energiespeicher geführt werden.

Somit ist das Ereignis ein Auftreten von Feuchtigkeit. Der Energiespeicher ist ausgebildet, um bei Kontakt mit der Feuchtigkeit die thermische Energie freizusetzen. Der Energiespeicher besteht somit aus einem Material, das bei Kontakt mit Wasser exotherm reagiert.

Gemäß einer Ausführungsform kann der Wandler ein Thermoelement umfassen. Mittels eines Thermoelements kann die thermische Energie in eine elektrische Spannung gewandelt werden. Dabei wird ein bestehender Temperaturunterschied im Bereich des Thermoelements ausgenutzt. Die von dem Thermoelement erzeugte Spannung kann zum Betrieb der Schaltung genutzt werden. Um genügend elektrische Energie zu erzeugen, kann der Wandler eine Mehrzahl von in Reihe oder in Serie geschaltete Thermoelemente aufweisen. Thermoelemente lassen sich sehr klein realisieren und sind somit für den Einsatz in Mikrosystemen geeignet.

Ferner weist die elektrische Schaltung eine Funkschnittstelle zur drahtlosen Übertragung des elektrischen Signals aufweist. Bei der Funkschnittstelle kann es sich um eine Antenne handeln. Auf diese Weise kann das elektrische Signal an eine entfernt angeordnete Auswerteeinrichtung übertragen werden, ohne das eine Verbindungsleitung zwischen der Vorrichtung und der Auswerteeinrichtung erforderlich ist.

Ein Überwachungssystem zur Durchführung des erfindungsgemäßen Verfahrens weist die folgenden Merkmale auf:
mindestens eine eine genannte Vorrichtung; und
eine Auswerteeinrichtung, die ausgebildet ist, um das elektrische Signal der mindestens einen Vorrichtung über eine Schnittstelle zu empfangen und auszuwerten.

Die Auswerteeinrichtung kann eine elektrische Schaltung sein. Die Auswerteeinrichtung kann permanent in Betrieb sein und dazu eine geeignete Energieversorgung aufweisen, beispielsweise eine Batterie oder einen Anschluss an ein Stromnetz. Wird das elektrische Signal von der Vorrichtung über eine Funkschnittstelle ausgesendet, so kann die Auswerteeinrichtung eine Antenne zum Empfangen des Signals aufweisen. Die Auswerteeinrichtung kann ausgebildet sein, um einen Alarm auszulösen, wenn das elektrische Signal empfangen wird.

Die Erfindung wird nachstehend anhand der beigefügten Zeichnungen beispielhaft näher erläutert. Es zeigen:
- Fig. 1: eine Vorrichtung für ein Ausführungsbeispiel;
- Fig. 2: ein Oberwachungssystem für ein Ausführungsbeispiel; und
- Fig. 3: ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

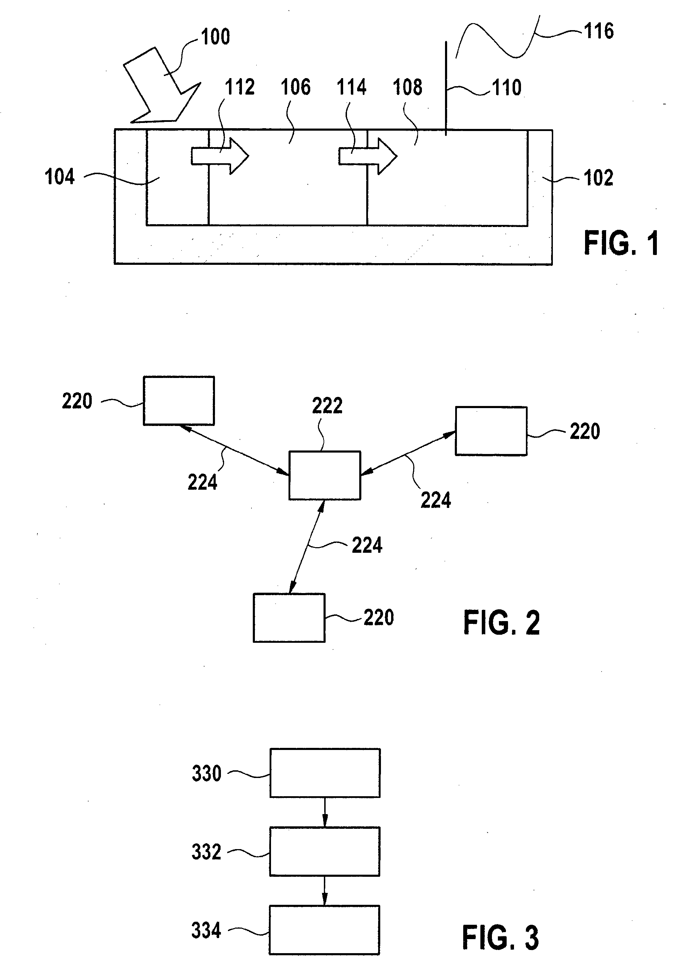

Fig. 1 zeigt eine Vorrichtung zum Melden eines Ereignisses 100. Die Vorrichtung weist ein Gehäuse 102, einen chemischen Energiespeicher 104, einen Wandler 106 und eine elektrische Schaltung 108 mit einer Antenne 110 auf. Das Gehäuse 102 weist einen Boden und eine umlaufende Wand auf. Der chemische Energiespeicher 104, der Wandler 106 und die elektrische Schaltung 108 sind innerhalb des Gehäuses 102 angeordnet. Das Gehäuse 102 weist keinen Deckel auf. Die Antenne 110 ragt aus dem Gehäuse 102 heraus. Der chemische Energiespeicher 104, der Wandler 106 und die elektrische Schaltung 108 sind nebeneinander angeordnet, wobei der Wandler 106 zwischen dem chemischen Energiespeicher 104 und der elektrischen Schaltung 108 angeordnet ist.

Das Ereignis 100 kann, wie durch den Pfeil gekennzeichnet, direkt auf eine nicht von dem Gehäuse 102 abgedeckte Oberfläche des chemischen Energiespeichers 104 einwirken. Der chemische Energiespeicher 104 ist ausgebildet, um als Folge des Einwirkens des Ereignisses 100 thermische Energie zu erzeugen und über einen Wärmeübertrag 112 an den Wandler 106 zu übertragen. Der Wandler 106 ist ausgebildet, um die von dem chemischen Energiespeicher 104 empfangene thermische Energie in elektrische Energie zu wandeln und über einen Energieübertrag 114 an die elektrische Schaltung 108 zu übertragen. Die elektrische Schaltung 108 ist ausgebildet, um aktiviert durch die elektrische Energie ein elektrisches Signal zu erzeugen und an die Antenne 110 auszugeben. Über die Antenne 110 wird das elektrische Signal in Form einer Funkmeldung 116 in eine Umgebung der Vorrichtung ausgesendet. Auf diese Weise wird die Funkmeldung 116 als Folge des Einwirkens des Ereignisses 100 auf die Vorrichtung ausgesendet.

Um Ereignisse 100 unterschiedlicher Art detektieren und melden zu können, können unterschiedliche Energiespeicher 104 vorgesehen sein. Die Energiespeicher 104 können unterschiedliche Substanzen aufweisen. Jede Substanz kann ausgebildet sein, um durch Einwirken des ihr zugeordneten Ereignisses Wärme zu erzeugen. Unter Einwirkung eines einer anderen Substanz zugeordneten Ereignisses kann die Substanz dagegen stabil bleiben und nicht reagieren. In diesem Fall kann der Wandler 106 mehreren Energiespeichern 104 zugeordnet sein oder es kann für jeden Energiespeicher 104 ein eigener Wandler 106 vorgesehen sein.

Gemäß einem Ausführungsbeispiel ist die Vorrichtung als ein Mikrosystem realisiert. Bei dem Ereignis 100 handelt es sich um ein Auftreten von Wasser. Der chemische Energiespeicher ist eine Chemikalie oder umfasst eine Chemikalie, die bei Kontakt mit Wasser Wärme freisetzt. Beispielhaft sei als mögliche Chemikalie Calciumoxid genannt. Durch das Einwirken von Wasser reagiert das Calciumoxid unter Wärmeentwicklung zu Calciumhydroxid. Durch den Wärmeübertrag 112 wird Wärme an den Wandler 106 übertragen. Der Wandler 106 ist als Energy Harvester, beispielsweise in Form eines Thermopile, realisiert. Durch den Energieübertrag 114 wird Energie von dem Wandler 106 an die elektrische Schaltung 108 übertragen. Die elektrische Schaltung 108 ist als integrierte Elektronik realisiert.

In Fig. 1 ist der schematische Aufbau, in Form eines Schnittbilds, des autarken Mikrosystems mit dem chemischen Energiespeicher 104 gemäß einem Ausführungsbeispiel der vorliegenden Erfindung gezeigt. Das Mikrosystem besteht aus einer zur Umgebung offenen Zelle 102, welche z.B. mit Calciumoxid als Energiespeicher 104 gefüllt ist. Bei Kontakt mit Wasser 100 reagiert das Calciumoxid 104 unter starker Wärmefreisetzung 112. Diese Wärme 112 wird von dem Energy Harvester 106, z.B. ein Thermopile, in eine elektrische Spannung 114 umgesetzt. Mit der erzeugten Spannung 114 wird der integrierte Schaltkreis 108 betrieben, welcher den Wasserkontakt 100 über eine Funkschnittstelle 110 meldet. Das Mikrosystem kann zum Beispiel als Silizium-MEMS gefertigt werden, oder auch auf Kunststoffbasis mit hybrid integrierter Mikroelektronik 110, oder auf Kunststoffbasis mit integrierten organischen Schaltkreisen 110.

Somit kann der chemische Energiespeicher 104 für ein autarkes Mikrosystem eingesetzt werden. Dabei erfolgt eine direkte Aktivierung des chemischen Energiespeichers 104 durch die von dem autarken Mikrosystem zu messende Größe 100. Mittels des chemischen Energiespeichers 104 erfolgt die garantierte Bereitstellung einer ausreichenden Energiemenge 114 um dem autarken Mikrosystem das drahtlose Melden 116 eines Sensorereignisses 100 zu ermöglichen.

Es ist somit nicht erforderlich, dass z.B. eine Batterie die benötigte Energie bereitstellt, um eine Auswerteelektronik zu betreiben, welche wiederum über ein elektrisch betriebenes Sensorelement, z.B. einen Temperatursensor, die Umgebung des Mikrosystems überwacht und den Eintritt eines zu überwachenden Ereignisses, z.B. eines Brandes, meldet. Eine solche Batterie könnte im Gegensatz zu dem chemischen Energiespeicher zum Zeitpunkt des Eintrittes des Ereignisses 100 bereits erschöpft sein.

Das in Fig. 1 gezeigte autarke Mikrosystem kann zur Überwachung von Gebäuden, auch Wohngebäuden, und Industrieanlagen eingesetzt werden.

Das anhand von Fig. 1 beschriebene Ausführungsbeispiel stellt eine Kombination des Energiespeichers 104 mit dem Sensorelement eines autarken Mikrosystems dar. Die Energie wird chemisch gespeichert und durch den Eintritt des zu überwachenden Ereignisses 100 freigesetzt. Mit der freigesetzten Energie 112 kann dann der Energy Harvester 106 betrieben werden, welcher die Elektronik 108 des Mikrosystems versorgt, um z.B. über eine Funkschnittstelle 110 das Eintreten des Ereignisses 100 an einen zentralen Knoten eines Sensornetzwerkes zu melden. Da die gespeicherte Energie nur durch den Eintritt des Ereignisses 100 freigesetzt wird, ist garantiert, dass die gespeicherte Energie zu diesem Zeitpunkt auch bereit steht.

Fig. 2 zeigt eine schematische Darstellung eines Überwachungssystems. Das Überwachungssystem weist eine Mehrzahl von Vorrichtungen 220 zum Melden eines Ereignisses und eine Auswerteeinrichtung 222 auf. Die Vorrichtungen 220 können entsprechend der anhand von Fig. 1 beschriebenen Vorrichtung ausgeführt sein. Jede der Vorrichtungen 220 ist über eine Schnittstelle 224 mit der Auswerteeinrichtung 222 gekoppelt. Die Vorrichtungen 220 sind jeweils ausgebildet, um ansprechend auf das Auftreten eines zu meldenden Ereignisses ein Signal zu erzeugen und das Signal über die Schnittstelle 224 an die Auswerteeinrichtung 222 zu übertragen. Die Auswerteeinrichtung 222 ist ausgebildet, um ein Signal zu empfangen, dass von einer der Vorrichtungen 220 über die Schnittstelle 224 übertragen wird. Die Auswerteeinrichtung 222 ist ausgebildet, um ein solch empfangenes Signal auszuwerten. Als Folge des Auswertens kann die Auswerteeinrichtung 222 ausgebildet sein, um einen Alarm auszulösen oder eine Information über den Empfang des Signals auszugeben, an eine weitere Einrichtung zu übertragen oder abzuspeichern. Beispielsweise können die Vorrichtungen 222 an unterschiedlichen Positionen in einem Gehäuse angeordnet sein und auf das Auftreten von Wasser reagieren. Über die Schnittstellen 224 können die von den Vorrichtungen 220 detektierten Ereignisse an einer zentralen Auswerteeinrichtung 222 zusammengefasst werden.

Fig. 3 zeigt ein Ablaufdiagramm eines Verfahrens zum Melden eines Ereignisses gemäß einem Ausführungsbeispiel der vorliegenden Erfindung. Das Verfahren basiert auf der Verwendung eines chemischen Energiespeichers und kann beispielsweise von der in Fig. 1 gezeigten Vorrichtung umgesetzt werden. Insbesondere basiert das Verfahren auf der Verwendung einer chemischen Reaktion, um das die Reaktion auslösende Ereignis zu melden. In einem Schritt 330 des Verfahrens wird ein entsprechender chemischer Energiespeicher bereitgehalten. Der chemische Energiespeicher wird so bereitgehalten, dass er sich in einem Einflussbereich des zu meldenden Ereignisses befindet. Dies kann dadurch gewährleistet werden, dass beispielsweise die Vorrichtung an einer geeigneten Position angeordnet und geeignet ausgerichtet wird. In einem Schritt 332 wird von dem chemischen Energiespeicher bereitgestellte Energie in elektrische Energie umgewandelt. Dies kann solange erfolgen, wie das Ereignis anhält, also weiteres Wasser auf den chemischen Energiespeicher trifft und der chemische Energiespeicher noch nicht verbraucht ist. In einem Schritt 334 wird die elektrische Energie verwendet, um ein elektrisches Signal zum Melden des Ereignisses zu erzeugen. Das elektrische Signal kann solange erzeugt werden, wie genügend elektrische Energie zur Verfügung steht. Treten zeitlich beabstandet zwei Ereignisse auf, so kann jeweils zum Zeitpunkt des Auftretens eines der Ereignisse thermische Energie erzeugt, gewandelt und zum Erzeugen des elektrischen Signals genutzt werden. Es kann also zu jedem Ereignis ein elektrisches Signal erzeugt werden. Dabei können die Verfahrensschritte 330 332, 334 ansprechend auf jedes der Ereignisse komplett durchlaufen werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Verfahren zum Melden eines Ereignisses, das die folgenden Schritte umfasst:
Bereithalten (330) eines Metalloxids als chemischen Energiespeicher (104) in einem Einflussbereich des Ereignisses, wobei der chemische Energiespeicher (104) ausgebildet ist, um ansprechend auf das Ereignis thermische Energie freizusetzen, wobei das Ereignis (100) ein Auftreten von Feuchtigkeit ist und wobei der Energiespeicher (104) ausgebildet ist, um bei Kontakt mit der Feuchtigkeit die thermische Energie freizusetzen;
Umwandeln (332) der thermischen Energie in elektrische Energie unter Verwendung eines Wandlers (106), der ausgebildet ist, um die thermische Energie in elektrische Energie zu wandeln; und
Verwenden (334) ausschließlich der elektrischen Energie, um eine Schaltung (108) zu betreiben, um ein elektrisches Signal zum Melden des Ereignisses zu erzeugen, wobei die elektrische Schaltung (108) eine Funkschnittstelle (110) zur drahtlosen Übertragung des elektrischen Signals aufweist, und wobei die Schaltung (108), der Energiespeicher (104) und der Wandler (106) von einem Gehäuse (102) aufgenommen sind, wobei das Gehäuse im Bereich des Energiespeichers (104) eine Umgebungsschnittstelle aufweist, um die Beeinflussung des Energiespeichers (104) durch das Ereignis (100) zu ermöglichen, wobei die Umgebungsschnittstelle geeignet, um Feuchtigkeit aus einer Umgebung durch eine Wand des Gehäuses (102) zu dem Energiespeicher (104) zu leiten.

2. Verfahren gemäß Anspruch 1, wobei der Energiespeicher (104), der Wandler (106) und die Schaltung (108) ein Mikrosystem bilden.

3. Verfahren gemäß einem der vorangegangenen Ansprüche, bei dem die Umgebungsschnittstelle eine Öffnung des Gehäuses (102) umfasst.

4. Verfahren gemäß einem der vorangegangenen Ansprüche, bei dem der Wandler (106) ein Thermoelement umfasst.

## Claims

1. Method for reporting an event, comprising the following steps:
providing (330) a metal oxide as a chemical energy reservoir (104) in a range of influence of the event, the chemical energy reservoir (104) being designed to release thermal energy in response to the event, the event (100) being an occurrence of moisture and the energy reservoir (104) being designed to release the thermal energy on contact with the moisture;
converting (333) the thermal energy into electrical energy by using a converter (106), which is designed to convert the thermal energy into electrical energy; and
using (334) exclusively the electrical energy to operate a circuit (108) in order to generate an electrical signal for reporting the event, the electrical circuit (108) having a radio interface (110) for the wireless transmission of the electrical signal, and the circuit (108), the energy reservoir (104) and the converter (106) being accommodated by a housing (102), the housing having in the region of the energy reservoir (104) an environmental interface to enable the energy reservoir (104) to be influenced by the event (100), the environmental interface being suitable for conducting moisture from an environment through a wall of the housing (102) to the energy reservoir (104).

2. Method according to Claim 1, the energy reservoir (104), the converter (106) and the circuit (108) forming a microsystem.

3. Method according to one of the preceding claims, in which the environmental interface comprises an opening in the housing (102).

4. Method according to one of the preceding claims, in which the converter (106) comprises a thermocouple.

## Revendications

1. Procédé de signalement d'un événement, comprenant les étapes suivantes :
mise en réserve (330) d'un oxyde métallique sous la forme d'un accumulateur d'énergie chimique (104) dans une zone d'influence de l'événement, l'accumulateur d'énergie chimique (104) étant configuré pour libérer de l'énergie thermique en réaction à l'événement,
l'événement (100) étant une manifestation d'humidité et l'accumulateur d'énergie (104) étant configuré pour libérer l'énergie thermique en cas de contact avec l'humidité ;
conversion (332) de l'énergie thermique en énergie électrique en utilisant un convertisseur (106), lequel est configuré pour convertir l'énergie thermique en énergie électrique ; et
utilisation (334) exclusive de l'énergie électrique pour faire fonctionner un circuit (108) en vue de générer un signal électrique destiné à signaler l'événement, le circuit électrique (108) possédant une interface fonctionnelle (110) destinée à la transmission sans fil du signal électrique, et le circuit (108), l'accumulateur d'énergie (104) et le convertisseur (106) étant accueillis par un boîtier (102), le boîtier possédant une interface environnementale dans la zone de l'accumulateur d'énergie (104) afin de permettre l'influence de l'accumulateur d'énergie (104) par l'événement (100), l'interface environnementale étant conçue pour guider l'humidité depuis un environnement à travers une paroi du boîtier (102) vers l'accumulateur d'énergie (104).

2. Procédé selon la revendication 1, selon lequel l'accumulateur d'énergie (104), le convertisseur (106) et le circuit (108) forment un microsystème.

3. Procédé selon l'une des revendications précédentes, selon lequel l'interface environnementale comprend une ouverture du boîtier (102).

4. Procédé selon l'une des revendications précédentes, selon lequel le convertisseur (106) comprend un thermocouple.
